# EUROPEAN PATENT SPECIFICATION

(11) **EP 1 238 128 B1**
(45) Date of publication and mention of the grant of the patent: **30.11.2005**
(21) Application number: 00983335.1
(22) Date of filing: 13.12.2000
(51) Int. Cl.: D03D 15/00, D03D 15/02, D04B 1/14, D04C 1/02

(54) **REINFORCED FABRIC**
VERSTÄRKTES GEWEBE
TISSU RENFORCE

(30) Priority: 15.12.1999 EP 99204338; 15.12.1999 EP 99204340; 15.12.1999 EP 99204339
(43) Date of publication of application: 11.09.2002
(73) Proprietor: N.V. BEKAERT S.A., 8550 Zwevegem (BE)
(72) Inventor: DE CLERCQ, Elsie, B-9620 Zottegem (BE); VAN GIEL, Frans, B-8500 Kortrijk (BE)
(86) International application number: PCT/EP2000/012765
(87) International publication number: WO 2001/044548

(56) References cited:
- EP-A- 0 758 693
- EP-A- 0 940 277
- WO-A-99/10174
- AT-B- 198 914
- FR-A- 2 708 294
- GB-A- 1 374 223
- US-A- 5 212 010

## Description

### Field of the invention.

The invention relates to a fabric comprising metal cords and thermoplastic material.

### Background of the Invention.

Although a lot of efforts have been made to reinforce plastics, there is a considerable need for reinforced articles which combine the characteristics of having a high strength and a light weight. Furthermore, for certain applications it can be desirable that the reinforced polymer can be flexed or bent to shape.

Various means of reinforcing thermoplastic materials with metal have been tried, including the use of metal rods or metal plates. WO99/10174 describes a thermoplastic article in the form of sheet material, obtained by applying heat and pressure to a laminate comprising an upper sheet of a copolyester material, metallic wire, rods or bars and a lower sheet of a copolyester material.

US 5,212,010 describes a fabric comprising interwoven resin coated fibers such as metal fibers. EP-A-0 758 693 discloses a fabric according to the preamble of claim 1.

### Summary of the Invention.

It is an object of the present invention to provide a fabric comprising elongated metal cords and a thermoplastic material. This fabric can be used to manufacture reinforced articles.
It is a further object to form metal reinforced articles characterised by a high strength to weight ratio.
It is also an object to reach a good adhesion between the metal and the thermoplastic material.
Furthermore it is an object to provide a method for the manufacturing of reinforced articles.

According to a first aspect of the present invention a fabric comprising elongated metal elements and a thermoplastic material is provided.
At least part of the elongated metal elements are metal cords.

The thermoplastic material functions as filling element. After applying heat and/or pressure to the fabric, the thermoplastic material fills the interstices between the metal cords. This means that the thermoplastic material must be present in a sufficient volume to fill these interstices. Therefore, the thermoplastic material is present in a volume of at least 40 % of the total volume of the fabric. More preferably, the volume of the thermoplastic material is 50 % of the total volume of the fabric. The total volume of the fabric has to be considered as the volume of the metal cords and the volume of the thermoplastic material out of which the fabric is made.

Any thermoplastic material can be considered as filling element.
With a thermoplastic material is meant any thermoplast and any thermoplastic elastomer.
Examples of suitable thermoplastic materials are : polyethylene (PE), polypropylene (PP), polystyrene (PS), polyethylene terephthalate (PET), polyethylene napthalate (PEN), polybuteen terephthalate (PBT) polyvinylchloride (PVC), polyester, polyamide (PA) , polyimide (PI), polycarbonate (PC), styrene acrilonitryl (SAN), acrylonitril-butadiene-styrene (ABS), thermoplastic polyurethane (TPU), thermoplastic polyolefins (TPO), thermoplastic copolyetheresters, copolymers of these polymers or similar materials.

The polymer material can be present in the fabric as filaments. Alternatively, the thermoplastic material can be present as coating on the metal cords or on a number of metal cords forming strips.
The total volume of the thermoplastic material present as filament and/or as coating amounts to at least 40 % of the total volume of the fabric.
In addition to the thermoplastic material present in the fabric, thermoplastic material can also be applied on the fabric.

Suitable filaments are for example polyamide filaments, polyethylene filaments, polypropylene filaments or polyester filaments.

For the purpose of this application, a filament has to be understood as an elongated element of a thermoplastic material. It may have various cross-sections, such as circular, oval, rectangular. Strips made from a thermoplastic material are also suitable.
Different filaments may be plied together to form filament yam.

A fabric can be understood as a woven, knitted or braided structure.

Any metal can be used to provide the elongated metal elements. Preferably, alloys such as high carbon steel or stainless steel alloys are used.
At least part of the elongated metal elements are metal cords, such as steel cords.
Preference is given to steel cords with a large and rough surface so as to increase the mechanical anchoring in the matrix. Examples are 3x3 or 7x3 cords.
Multistranded cords are preferred to single stranded cords.
Suitable cords are high elongation cords and high impact cords.

In addition to the metal cords, metal wires can be present in the fabric. The wires may have various cross-sections and geometries, they may for example be circular, oval or flat.

The tensile strength of the metal elements is preferably higher than 1500 N/mm². The range of the tensile strength is for example between 1500 N/mm² to 3000 N/mm² or even more.

It may be desired to use metal cords having a structural elongation. Preferred metal cords have an elongation of more than 0.3 %, for example 1 %, compared to the initial length of the metal cord on which a force of at least 10 % of the total force at rupture of these elements is applied. The elongation of these metal cords is due to the structural deformation of the metal cords.
The use of this type of metal cords features the advantage that the bending properties of the fabric are improved. When a fabric comprising metal cords having a structural deformation is subjected to a forming process, the force needed to form the fabric into a shaped reinforced article is partially used to elongate the metal cord. The force applied will elongate the metal cord by partially removing the structural deformation. A structural deformation can be an undulation, either uni- or multidirectional. Another deformation can be obtained by using a metal cord having a spiral shape.

Different embodiments of a fabric according to the present invention can be considered.

A first group consists of fabrics comprising metal cords and polymer filaments of a thermoplastic material.
The fabric may for example be a woven, braided or knitted structure.

Some examples of woven structures are :
- A fabric whereby metal cords form the warp, whereas the polymer filaments form the weft or vice versa polymer filaments form the warp and metal cords form the weft.
- A fabric whereby the warp and/or the weft are formed by a combination of metal cords and polymer filaments.
   For example, the warp filaments comprise in turn a metal cord and a polymer filament.
   The number of metal cords or polymer filaments of the warp and the weft can be varied.

A second group of fabrics comprises fabrics made from metal cords coated with a thermoplastic material.

The coating of a metal cord can be applied by any conventional means. A possible coating method is extrusion.
For the purpose of the invention a coated metal cord has to be understood as an element substantially surrounded by at least one layer of a thermoplastic material.
This means that this can also be realised by wrapping thermoplastic threads or filaments around a metal cord.

It can be desirable that the metal cords are coated with a number of consecutive layers of a thermoplastic material. The material most closely to the metal surface has an elastic modulus which approaches the modulus of the metal cord, whereas the outer layer of thermoplastic material has a modulus approaching the modulus of the material in which the metal cord or cords is/are embedded. In the case, there are layers of a thermoplastic material present inbetween the most inner and the most outer layer, the modulus of these layers changes gradually.
By this consecutive number of layers present around the metal cord, delamination is avoided.

The fabric may be a woven, braided or knitted structure.
Examples of woven structures are :
- A fabric whereby the warp and/or the weft are formed by coated metal cords.
- Fabrics whereby the warp and/or the weft are a combination of metal cords and coated metal cords or a combination of polymer filaments and coated metal cords.

A third group comprises fabrics made of strips.
A strip comprises two or more metal cords embedded in a matrix of a thermoplastic material. The metal cords are preferably located parallel in the plane of the strip. A possible method of manufacturing such a strip is by coextrusion.

In addition to the thermoplastic material present in the fabric, thermoplastic material can also be applied on the fabric, either a fabric of group one, two or three.

By varying the number of polymer filaments in the fabric, the diameter of the polymer filaments and/or the thickness of the coating, the total amount of the thermoplastic material can be influenced. As described above the total volume of the thermoplastic material present in the fabric is at least 40 % of the total volume of the fabric.
In the case of a woven fabric, the amount of thermoplastic material can further be influenced by varying the weaving structure or the inweaving factor, either of the warp or the weft or of both, or by varying the number of filaments or metal cords per length unit of the fabric in warp or weft direction.
The inweaving factor is defined as the ratio of the length of filament to the length of the woven structure.

The fabrics may further comprise glass fibers, organic fibers such as carbon fibers and/or glass fibers or organic fibers coated with a thermoplastic material.

To improve the corrosion resistance of the metal cords, the metal cords can be coated with a metallic coating layer such as zinc or a zinc alloy such as brass. Another suitable zinc alloy is an alloy comprising 2 to 10 % Al and 0.1 to 0.4 % of a rare earth element such as La and/or Ce.

In order to assure a good adhesion between the metal and the thermoplastic material, an adhesion promoter can be applied on the metal cord.
Possible adhesion promoters are bifunctional coupling agents such as silane compounds. One functional group of these coupling agents is responsible for the binding with the metal or metal oxides; the other functional group reacts with the polymer.
More details about these coupling agents can be found in the PCT application WO-A-99/20682.
Other suitable adhesion promoters are aluminates, zirconates or titanates.

The eventual use of a fabric according to the invention is to manufacture reinforced articles.
In order to manufacture a reinforced sheet or a reinforced article, a fabric comprising the metal cords and the thermoplastic material is subjected to a temperature and/or pressure sufficient to cause the polymeric material to flow and fill the interstices between the metal filaments. This can be done in one step or may require subsequent steps.
Alternatively, a layered structure, comprising a number of fabrics according to the invention brought into contact with each other, is subjected to a heat and/or pressure treatment.
The fabric or layered structure is heated till a temperature that allows the thermoplastic material to soften and to flow out. The temperature remains thereby lower than the melting point of the metal cords.
The heat and/or pressure can for example be applied by feeding the fabric through pressure rollers.

Since the metal cords have a high thermal and electric conductivity, the metal cords themselves can also be used to heat and soften the thermoplastic material. The latter way of heating can be considered as very efficient since it decreases the time to soften the thermoplastic material.

After applying heat and/or pressure to the fabric or to the layered structure, the thermoplastic material has preferably filled the interstices between the metal cords and most preferably the metal cords are completely embedded in the thermoplastic material.

During the manufacturing of a reinforced article, a fabric according to this invention has the advantage that it can be flexed or bent to shape.
This can for example be realised by placing a fabric or possibly a layered structure comprising a number of fabrics, in a press, possibly in a heated press.
Alternatively, a shaped reinforced article can be manufactured in two successive steps. In a first step a reinforced sheet can be obtained by applying heat and/or pressure to a fabric according to the invention and in a second step, this reinforced sheet can be deformed to obtain a reinforced article.

Possible forming processes are press forming, flow moulding, thermofolding and membrane forming.
In a press forming operation (stamping) a fabric or a reinforced sheet is heated to processing temperature and stamped to shape in a two-part-tool under pressure.
In a flow moulding operation (moulding) a fabric or a reinforced sheet is heated to processing temperature, placed in a two-part-tool and then under pressure the mould cavity is filled by polymer matrix flowing into every recess of the mould.
In a thermofolding operation a fabric or a reinforced sheet is heated locally and folded.
In a membrane forming operation an autoclave pressure is used to drape the preheated fabric or reinforced sheet over a tool.

The reinforced article can further be embedded in a matrix of thermoplastic material either before or after the forming process.
A possible method to realise this is by bringing the fabric into contact with a thermoplastic sheet either at one side or at the upper side and at the lower side of the fabric. In this way a laminated structure is formed. The thermoplastic sheets are bonded to the fabric for example by pressing the laminated structure through heated rollers.
An alternative method to embed the fabric in a matrix of a thermoplastic material is by overinjection or overextrusion.

### Brief description of the drawings.

The invention will now be described into more detail with reference to the accompanying drawings wherein
- FIGURES 1 to 5 shows different embodiments of fabrics comprising metal cords and filaments of a thermoplastic material;
- FIGURE 6 shows a coated metal cord;
- FIGURE 7 is an illustration of a woven fabric comprising coated metal cords;
- FIGURE 8 shows a strip, comprising a number of elongated metal members embedded in a matrix of a thermoplastic material.
- FIGURE 9 illustrates a woven fabric comprising strips.

### Description of the preferred embodiments of the invention.

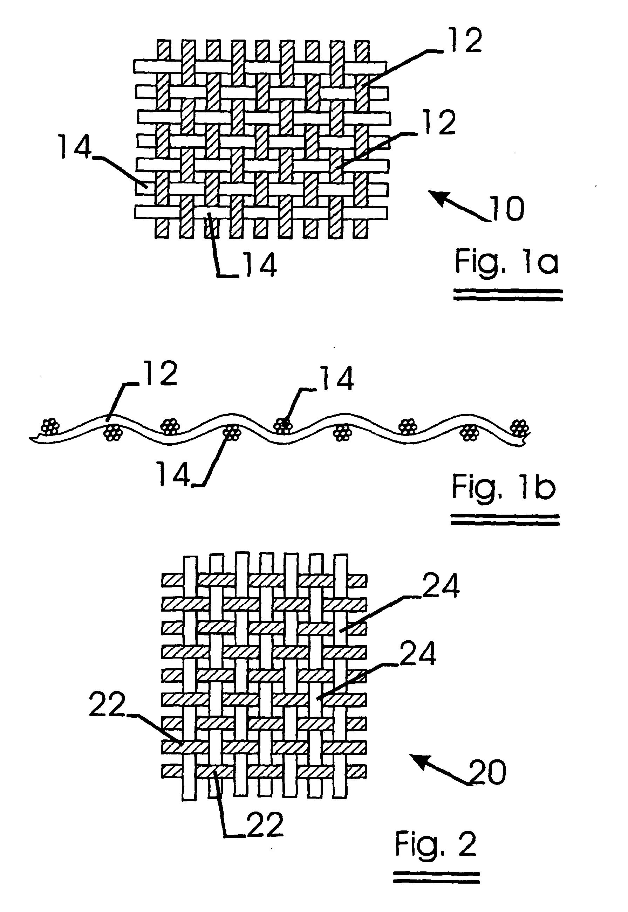

Figures 1 to 5 are illustrations of fabrics according to the first group of fabrics, comprising metal cords and polymer filaments of a thermoplastic material.

Figure 1a shows a woven fabric 10. Metal cords 12 form the warp, whereas polymer filaments 14 such as polyamide filaments form the weft. The metal cords are for example steel cords of the type 7x7x0.15. The total volume of the polymer amounts to 50 % of the total volume of the fabric.
Figure 1b shows the cross-section of a woven fabric 10.

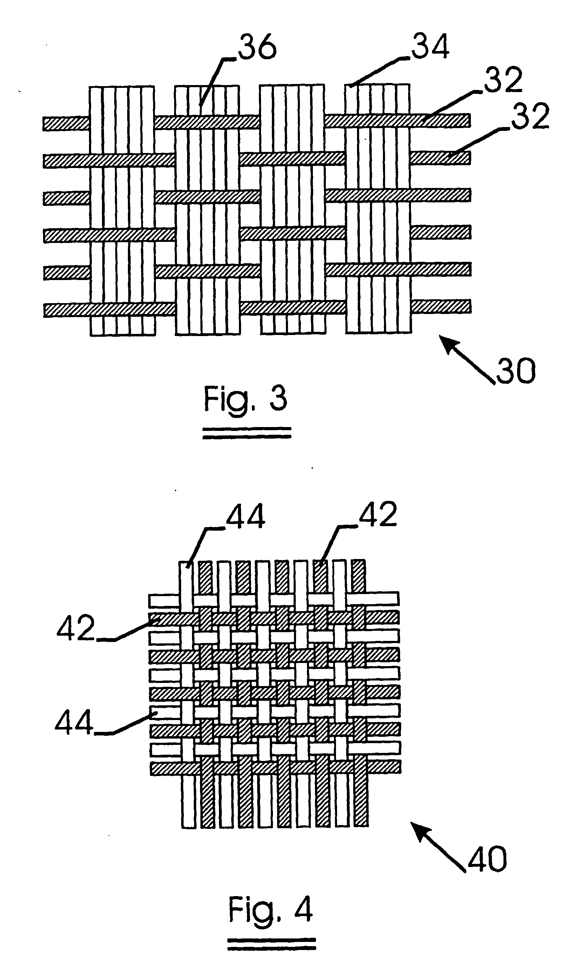

Figure 2 and 3 shows two embodiments of woven fabrics 20 and 30, whereby the weft comprises steel cords 22 and 32, and the warp comprises polyamide filaments 24 and 34.
The steel cords are of the type 7x3x0.15.
The number of polymer filaments can be increased in order to increase the total amount of polymer present in the fabric.
In figure 3 the metal cords forming the warp are widely spaced and are criss-crossed by a bundle or a group 36 of polymer filaments 34.
The polymer filaments could thereby be interlaced.

Figure 4 shows a woven structure 40 whereby the warp and the weft filaments are a combination of metal cords and polymer filaments. The warp and the weft filaments comprise in turn a steel filament 42 and a polymer filament 44.
The number of metal cords and the number of polymer filaments, either in the warp or in the weft could thereby be varied.

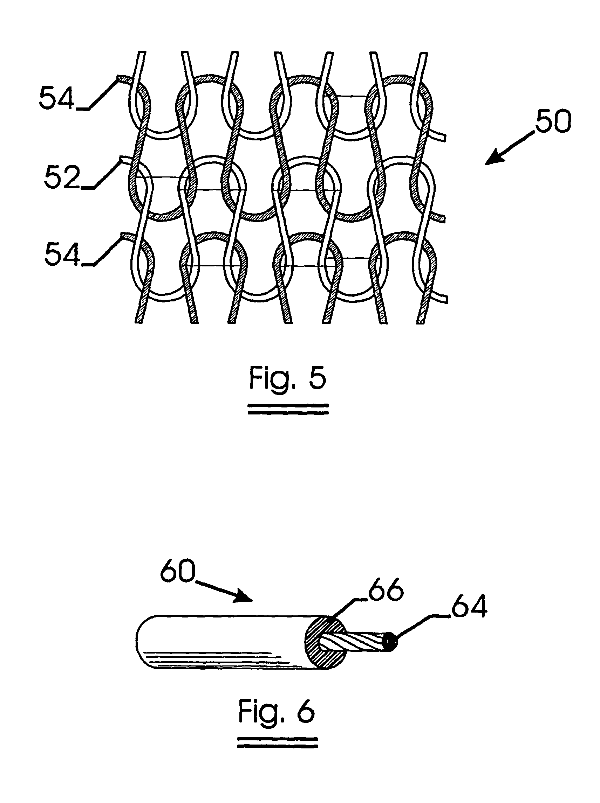

Figure 5 illustrates a knitted structure 50. Polymer filaments 52 and cords 54 are knitted together.

In order to increase the volume of the thermoplastic material, thermoplastic material can be applied on the fabric.

Figure 6 shows a steel cord 64 on which a coating of a thermoplastic material 66 is applied.

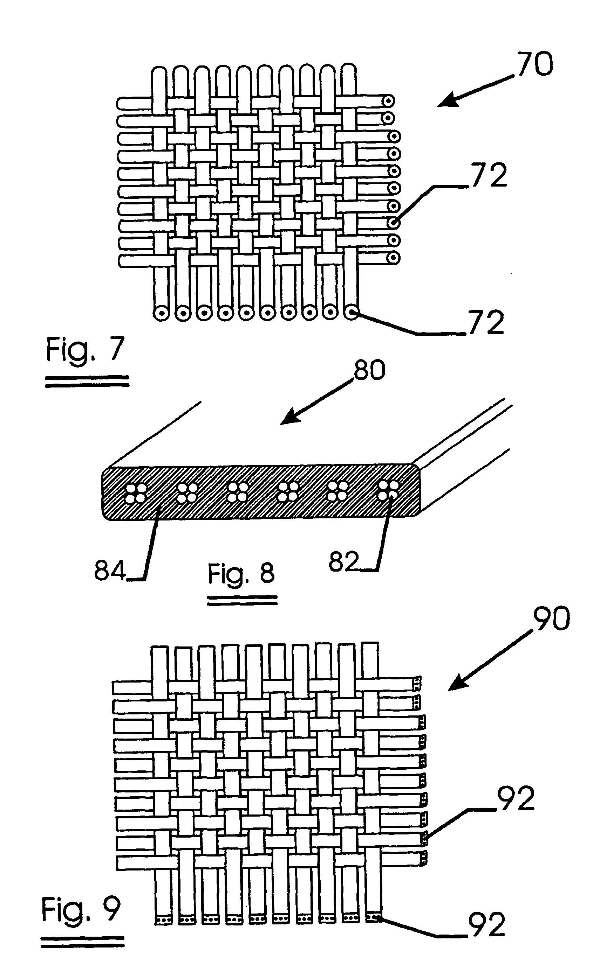

Figure 7 is an embodiment of the second group of fabrics.
Both the warp and the weft of the woven fabric 70 comprise coextruded steel cords 72.

Figure 8 shows a strip 80, comprising a number of elongated metal cords 82, embedded in a matrix of a thermoplastic material 84.

Figure 9 is an illustration of embodiments of the third group of fabrics. It shows a woven structure 90 comprising coextruded steel strips 92.

The adhesion between the metal cord and the thermoplastic material could be determined by performing a pull-out test.
In this test, the force needed to pull a metal cord, which is at one end embedded in a matrix of thermoplastic material over a short and well-controlled length, out of the matrix is determined. The length of the metal cord embedded in the thermoplastic material was 12.7 mm.

Two types of steel cords, more particularly of the type 7x3x0.15 and 2x0.3, are embedded in different matrices. The thermoplastic materials considered in the test are polyamide (PA), polycarbonate (PC), polyethylene terephthalate (PET), polyethylene (PE), polypropylene (PP) and thermoplastic polyurethane.

For the cord of the type 7x3x0.15 embedded in a matrix of PA, PC or PET, a good adhesion was obtained. The pull-out force equals the tensile strength of the 7x3x0.15 cord. 100 % of the steel cords were broken while pulled out.

If the cord is coated with brass or zinc, the adhesion to the thermoplastic material can further be improved.

For the cord of the type 2x0.3, the best adhesion was obtained with PET as matrix.

If the results of the two tested types of steel cords are compared, the cord of the type 7x3x0.15 gives the best adhesion.

It seems that a cord with a great specific surface gives a better anchoring in the matrix and as a consequence such a cord gives a good adhesion.

## Claims

1. A fabric (10) comprising elongated metal elements (12) and thermoplastic material (14), said thermoplastic matenal (14) being present in a volume of at least 40 % of the total volume of said fabric (10), **characterised in that** at least part of the elongated metal elements (12) are metal cords, having an elongation of more than 0.3% compared to the initial length of the metal cord when a face of 10% of the total force at rupture of said metal cord is applied.

2. A fabric according to claim 1, whereby said fabric is a woven, knitted or braided structure.

3. A fabric according to claim 1 or 2, whereby said metal cords are steel cords (12).

4. A fabric according to any one of claims 1 to 3, whereby said thermoplastic material is selected from the group consisting of polyethylene (PE), polypropylene (PP), polystyrene (PS). polyethylene terephthalate (PET), polyethylene napthalate (PEN), polybuteen terephthalate (PBT) polyvinylchloride (PVC), polyester, polyamide (PA), polyimide (PI), polycarbonate (PC), styrene acrilonitryl (SAN), acrylonitril-butadiene-styrene (ABS), thermoplastic polyurethane (TPU), thermoplastic polyolefins (TPO), thermoplastic copolyetheresters or copolymers of these polymers.

5. A fabric according to any one of claims 1 to 4, whereby said fabric comprises metal cords (12) and polymer filaments (14), said polymer filaments (14) being made of a thermoplastic material.

6. A fabric according to claim 5, whereby said fabric is a woven structure (40), comprising a warp and a weft, at least one of the warp or the weft comprising said polymer filaments (44).

7. A fabric according to any one of claims 1 to 4, whereby said fabric comprises metal cords (64) coated with a thermoplastic material (66).

8. A fabric according to claim 7, whereby said fabric is a woven structure, comprising a warp and a weft, at least one of the warp or the weft comprising metal cords coated with a thermoplastic material.

9. A fabric according to any one of claims 1 to 4, whereby said fabric comprises strip (80), said strips (80) comprising at least two elongated metal cords (82) embedded in a matrix of a thermoplastic material (84).

10. A fabric according to claim 9, whereby said fabric is a woven structure comprising a warp and a weft, at least one of the warp or the weft comprising said strips (80).

11. A fabric according to any one of claims 1 to 10, whereby a thermoplastic material is applied on the fabric.

12. The use of a fabric according to any one of claims 1 to 11 for the manufacturing of a reinforced article.

13. A method of manufacturing a reinforced article comprising the steps of
- providing a fabric according to any one of claims 1 to 11 or providing a layered structure comprising at least two layers, each layer comprising a fabric according to any one of claims 1 to 11;
- applying heat and/or pressure to said fabric or to said layered structure to form said reinforced article.

14. A reinforced article obtained by applying heat and/or pressure to a fabric according to any one of daim 1 to 11 or to a layered structure comprising a number of fabrics according to any one of claim 1 to 11.

## Patentansprüche

1. Gewebe (10), aufweisend gereckte Metallelemente (12) und thermoplastisches Material (14), wobei das thermoplastische Material (14) in einem Volumen von mindestens 40 % des Gesamtvolumens des Gewebes (10) vorhanden ist, **dadurch gekennzeichnet, daß** mindestens ein Teil der gereckten Metallelemente (12) Metallkords sind, die im Vergleich zur Anfangslänge des Metallkords eine Reckung von mehr als 0,3 % aufweisen, wenn eine Kraft von 10 % der Gesamtkraft beim Reißen des Metallkords angewendet wird.

2. Gewebe nach Anspruch 1, wobei das Gewebe eine gewebte, gewirkte oder geflochtene Struktur ist.

3. Gewebe nach Anspruch 1 oder 2, wobei die Metallkords Stahlkords (12) sind.

4. Gewebe nach einem der Ansprüche 1 bis 3, wobei das thermoplastische Material aus der Gruppe ausgewählt ist, die aus Polyethylen (PE), Polypropylen (PP), Polystyrol (PS), Polyethylenterephthalat (PET), Polyethylennaphthalat (PEN), Polybutenterephthalat (PBT), Polyvinylchlorid (PVC), Polyester, Polyamid (PA), Polyimid (PI), Polycarbonat (PC), Styrol-Acrylnitril (SAN), Acrylnitril-Butadien-Styrol (ABS), thermoplastischem Polyurethan (TPU), thermoplastischen Polyolefinen (TPO), thermoplastischen Copolyetherestern oder Copolymeren dieser Polymere besteht.

5. Gewebe nach einem der Ansprüche 1 bis 4, wobei das Gewebe Metallkords (12) und Polymerfilamente (14) aufweist und die Polymerfilamente (14) aus einem thermoplastischen Material hergestellt sind.

6. Gewebe nach Anspruch 5, wobei das Gewebe eine gewebte Struktur (40) ist, die eine Kette und einen Schuß aufweist, und mindestens eines von Kette und Schuß die Polymerfilamente (44) aufweist.

7. Gewebe nach einem der Ansprüche 1 bis 4, wobei das Gewebe Metallkords (64) aufweist, die mit einem thermoplastischen Material (66) überzogen sind.

8. Gewebe nach Anspruch 7, wobei das Gewebe eine gewebte Struktur ist, die eine Kette und einen Schuß aufweist, und mindestens eines von Kette und Schuß Metallkords aufweist, die mit einem thermoplastischen Material überzogen sind.

9. Gewebe nach einem der Ansprüche 1 bis 4, wobei das Gewebe Streifen (80) aufweist und die Streifen (80) mindestens zwei gereckte Metallkords (82) aufweisen, die in einer Matrix aus einem thermoplastischen Material (84) eingebettet sind.

10. Gewebe nach Anspruch 9, wobei das Gewebe eine gewebte Struktur ist, die eine Kette und einen Schuß aufweist, und mindestens eines von Kette und Schuß die Streifen (80) aufweist.

11. Gewebe nach einem der Ansprüche 1 bis 10, wobei ein thermoplastisches Material auf das Gewebe aufgetragen ist.

12. Benutzung eines Gewebes nach einem der Ansprüche 1 bis 11 zur Herstellung eines verstärkten Gegenstandes.

13. Verfahren zur Herstellung eines verstärkten Gegenstandes, das die folgenden Schritte umfaßt:
- Bereitstellen eines Gewebes nach einem der Ansprüche 1 bis 11 oder Bereitstellen einer Schichtenstruktur, die mindestens zwei Schichten aufweist, wobei jede Schicht ein Gewebe nach einem der Ansprüche 1 bis 11 aufweist,
- Anwenden von Wärme und/oder Druck auf das Gewebe oder auf die Schichtenstruktur, um den verstärkten Gegenstand zu bilden.

14. Verstärkter Gegenstand, der durch Anwenden von Wärme und/oder Druck auf ein Gewebe nach einem der Ansprüche 1 bis 11 oder auf eine Schichtenstruktur, die eine Anzahl von Geweben nach einem der Ansprüche 1 bis 11 aufweist, erhalten wird.

## Revendications

1. Tissu (10) comprenant des éléments métalliques allongés (12) et un matériau thermoplastique (14), ledit matériau thermoplastique (14) étant présent dans un volume d'au moins 40 % du volume total dudit tissu (10), **caractérisé en ce qu'**au moins une partie des éléments métalliques allongés (12) est constituée de cordes métalliques, ayant un allongement de plus de 0,3 % comparé à la longueur initiale de la corde métallique lorsque l'on applique une force de 10 % de la force totale à la rupture de ladite corde métallique.

2. Tissu selon la revendication 1, dans lequel ledit tissu est une structure tissée, tricotée ou tressée.

3. Tissu selon la revendication 1 ou 2, dans lequel lesdites cordes métalliques sont des cordes d'acier (12).

4. Tissu selon l'une quelconque des revendications 1 à 3, dans lequel ledit matériau thermoplastique est choisi dans le groupe constitué du polyéthylène (PE), polypropylène (PP), polystyrène (PS), polytéréphtalate d'éthylène (PET), polynaphtalate d'éthylène (PEN), polytéréphtalate de butylène (PBT), polychlorure de vinyle (PVC), polyester, polyamide (PA), polyimide (PI), polycarbonate (PC), styrène-acrylonitrile (SAN), acrylonitrile-butadiène-styrène (ABS), poly-uréthane thermoplastique (TPU), polyoléfines thermo-plastiques (TPO), copolyétheresters thermoplastiques ou copolymères de ces polymères.

5. Tissu selon l'une quelconque des revendications 1 à 4, dans lequel ledit tissu comprend des cordes métalliques (12) et des filaments polymères (14), lesdits filaments polymères (14) étant faits d'un matériau thermoplastique.

6. Tissu selon la revendication 5, dans lequel ledit tissu est une structure tissée (40), comprenant une chaîne et une trame, au moins l'une de la chaîne ou de la trame comprenant lesdits filaments polymères (44).

7. Tissu selon l'une quelconque des revendications 1 à 4, dans lequel ledit tissu comprend des cordes métalliques (64) revêtues d'un matériau thermoplastique (66).

8. Tissu selon la revendication 7, dans lequel ledit tissu est une structure tissée, comprenant une chaîne et une trame, au moins l'une de la chaîne ou de la trame comprenant des cordes métalliques revêtues d'un matériau thermoplastique.

9. Tissu selon l'une quelconque des revendications 1 à 4, dans lequel ledit tissu comprend des rubans (80), lesdits rubans (80) comprenant au moins deux cordes métalliques allongées (82) enrobées dans une matrice d'un matériau thermoplastique (84).

10. Tissu selon la revendication 9, dans lequel ledit tissu est une structure tissée comprenant une chaîne et une trame, au moins l'une de la chaîne ou de la trame comprenant lesdits rubans (80).

11. Tissu selon l'une quelconque des revendications 1 à 10, dans lequel on applique un matériau thermoplastique sur le tissu.

12. Utilisation d'un tissu selon l'une quelconque des revendications 1 à 11 pour la fabrication d'un article renforcé.

13. Procédé de fabrication d'un article renforcé comprenant les étapes suivantes :
- mettre à disposition un tissu selon l'une quelconque des revendications 1 à 11 ou mettre à disposition une structure multicouche comprenant au moins deux couches, chaque couche comprenant un tissu selon l'une quelconque des revendications 1 à 11 ;
- appliquer de la chaleur et/ou une pression audit tissu ou à ladite structure multicouche pour former ledit article renforcé.

14. Article renforcé obtenu en appliquant de la chaleur et/ou une pression à un tissu selon l'une quelconque des revendications 1 à 11 ou à une structure multicouche comprenant un nombre de tissus selon l'une quelconque des revendications 1 à 11.
